# EUROPÄISCHE PATENTANMELDUNG

(11) **EP 1 103 823 A2**
(43) Veröffentlichungstag der Anmeldung: **30.05.2001**
(21) Anmeldenummer: 00123436.8
(22) Anmeldetag: 03.11.2000
(51) Int. Cl.: G01S 13/00, G01S 17/00

(54) **Verfahren zum Justieren eines Abstands- und Richtungssensors eines Fahrzeuges**

(30) Priorität: 27.11.1999 DE 19957186
(71) Anmelder: Volkswagen Aktiengesellschaft, 38436 Wolfsburg (DE)
(72) Erfinder: Spichalsky, Carsten, Dipl.-Ing., 38165 Lehre (DE); Ruchatz, Thomas, Dipl.-Ing., 38165 Lehre (DE)

(57) **Zusammenfassung**

Die Erfindung betrifft ein Verfahren zum Justieren eines Sensors eines Fahrzeuges zur Bestimmung des Abstandes und der Richtung von Objekten relativ zum Fahrzeug, bei dem das technische Problem, die Ausrichtung des Abstands- und Richtungssensors eines Fahrzeuges fortlaufend zu überprüfen, durch ein Verfahren gelöst wird, bei dem während der Fahrt fortlaufend mit Hilfe des Sensors der Abstand und der Richtungswinkel von Objekten relativ zum Fahrzeug erfaßt werden, bei dem die Objekte zeitlich verfolgt und Richtungsvektoren berechnet werden, bei dem aus den Richtungsvektoren die relative Lage der Fahrbahn zum Fahrzeug und daraus die gemessene Fahrtrichtung ermittelt wird, bei dem mit Hilfe eines Gierratensensors und der Fahrzeuggeschwindigkeit fortlaufend die Fahrtrichtung des Fahrzeuges berechnet wird, bei dem die Differenz der aus den Meßwerten des Sensors ermittelten Fahrtrichtungen und der mittels des Gierratensensors und der Fahrzeuggeschwindigkeit ermittelten Fahrtrichtungen berechnet werden und bei dem aus den Differenzen der Fahrtrichtungen die Winkeldejustage des Sensors berechnet wird.

Zur Durchführung des Verfahrens ist ein Sensor vorgesehen, dessen Justiermittel selbsttätig durch Antriebsmittel eingestellt werden können.

## Beschreibung

Die Erfindung betrifft ein Verfahren zum Justieren eines Sensors eines Fahrzeuges zur Bestimmung des Abstandes und der Richtung von Objekten relativ zum Fahrzeug sowie einen entsprechenden Sensor.

Derartige Abstands- und Richtungssensoren werden im Rahmen einer automatischen Geschwindigkeitsregelung oder einer Kollisionserkennung bei Kraftfahrzeugen verwendet.

Aus dem Stand der Technik der WO 98/38691 ist ein Verfahren zum Justieren eines Abstands- und Richtungssensors bekannt, bei dem das ruhende Kraftfahrzeug relativ zu einem ruhenden Zielobjekt positioniert wird, das als Referenzziel für den Abstandssensor geeignet ist. Dabei wird eine Normalenrichtung des Zielobjektes in einem bekannten Winkel zu einer gewählten Referenzachse oder Referenzlinie des Kraftfahrzeuges einjustiert. Weiterhin werden mit einer Serviceeinheit die Meßwerte des Entfernungssensors ausgelesen und die Verstell- bzw. Justierrichtung angezeigt. Anschließend wird das Zielobjekt an präzise vorgegebenen Positionen angeordnet und die Positionen mit dem Sensor gemessen. Die dabei ermittelten Meßwerte werden mit den exakt bekannten Ausrichtungen des Zielobjektes relativ zum Fahrzeug verglichen und durch eine Verstellung der Ausrichtung der Strahlcharakteristik des Entfernungssensors die Ausrichtung dieses Sensors justiert. Der Nachteil dieses Verfahrens besteht zum einen darin, daß die Justierung der Meßvorrichtung sehr genau durchgeführt werden muß. Zum anderen kann die Justierung des Sensors nur während des Aufenthaltes in einer Reparatur- oder Servicewerkstatt durchgeführt werden. Während der fortlaufenden Benutzung des Kraftfahrzeuges findet daher keine Überprüfung oder Justage der Ausrichtung des Sensors statt.

Der Erfindung liegt daher das technische Problem zugrunde, ein Verfahren anzugeben, mit dem die Ausrichtung des Abstands- und Richtungssensors eines Fahrzeuges fortlaufend überprüft wird. Darüber hinaus soll eine fortlaufende Justierung des Sensors aufgrund der ermittelten Winkeldejustage des Sensors ermöglicht werden.

Erfindungsgemäß ist das zuvor aufgezeigte technische Problem durch ein Verfahren mit den Merkmalen des Anspruches 1 gelöst. Erfindungsgemäß ist erkannt worden, daß der Sensor durch die von ihm ermittelten Meßdaten eine Selbstüberprüfung durchführen kann. Dazu werden während der Fahrt des Fahrzeuges fortlaufend mit Hilfe des Sensors der Abstand und der Richtungswinkel von Objekten relativ zum Fahrzeug erfaßt. Die Objekte werden zeitlich verfolgt und in vorgegebenen Zeitabständen werden Richtungsvektoren berechnet und abgespeichert. Aus den Richtungsvektoren wird dann die relative Lage der Fahrbahn zum Fahrzeug und daraus die vom Sensor gemessene Fahrtrichtung ermittelt. Daneben wird mit Hilfe eines Gierratensensors, der die Drehgeschwindigkeit um die Hochachse des Fahrzeuges mißt, und der Fahrzeuggeschwindigkeit fortlaufend die Fahrtrichtung des Fahrzeuges ermittelt und abgespeichert. Die Differenz der aus den Meßwerten des Sensores ermittelten Fahrtrichtungen und der mit dem Gierratensensor ermittelten Fahrtrichtungen werden anschließend berechnet, wobei aus den Differenzen der Fahrtrichtungen die Winkeldejustage des Sensors als Winkeldifferenz ermittelt wird. Somit wird aus den gemessenen Abständen und Richtungen von Objekten relativ zum Fahrzeug unter Heranziehen von Erfahrungswerten, die nachfolgend erläutert werden, und unter Heranziehung der mittels eines Gierratensensor und der Fahrzeuggeschwindigkeit ermittelten Fahrtrichtungen die Winkeldejustage des Sensors festgestellt.

Die vom Sensor erfaßten Objekte können einerseits relativ zur Fahrbahn bewegt und andererseits relativ zum Fahrzeug ruhend sein. Bei den erstgenannten Objekten handelt es sich um auf der gleichen Fahrbahn fahrende Fahrzeuge, insbesondere in der gleichen Richtung fahrende Fahrzeuge. Unter der Voraussetzung, daß ein vorausfahrendes Fahrzeug im Mittel dieselbe Fahrtrichtung wie das den Sensor aufweisende Fahrzeug aufweist, kann aus den zu einem vorausfahrenden Fahrzeug ermittelten Meßwerten die jeweilige Ausrichtung der Fahrbahn bzw. die dazugehörige Fahrrichtung bestimmt werden. Somit kann die Position und Ausrichtung der Fahrbahn relativ zum Fahrzeug berechnet werden. Sollte die daraus vom Sensor ermittelte Fahrtrichtung von der mittels des Gierratensensors und der Fahrzeuggeschwindigkeit ermittelten Fahrtrichtung abweichen, so kann die Größe der Winkeldejustage des Sensors relativ zum Fahrzeug berechnet werden.

Dann, wenn ruhende Objekte, also vorzugsweise Objekte die am Fahrbahnrand stehen, erfaßt werden, läßt sich daraus in einfacher Weise die relative Position der Fahrbahn zum Fahrzeug bestimmen und somit die Fahrtrichtung berechnen. Auch hieraus läßt im Vergleich zur mittels des Gierratensensors und der Fahrzeuggeschwindigkeit gemessenen Fahrtrichtung die Winkeldejustage des Sensors bestimmen.

Da im allgemeinen davon auszugehen ist, daß sich die Justage des Sensors nur über längere Zeiträume merklich verändert, da hauptsächlich Vibrationen des Fahrzeuges dafür verantwortlich sind, so wird in vorteilhafter Weise das Verfahren derart durchgeführt, daß die aus den Richtungsvektoren der Objekte ermittelten Fahrtrichtungen und die mit Hilfe des Gierratensensors ermittelten Fahrtrichtungen über einen vorgegebenen Zeitraum berechnet und abgespeichert werden. Somit ist eine Mittelung der Winkeldejustage des Sensors über eine Mehrzahl von ermittelten Fahrtrichtungen möglich. Dabei wird jeweils über eine vorgegebene zurückliegende Zeitdauer die Winkeldejustage gemittelt, wobei die vorgegebene Mittelungszeitdauer eine vorgegebene Länge aufweist, die mehr als eine Minute, mehr als 10 Minuten, mehr als eine Stunde oder mehr als einen Tag Fahrtzeit beträgt. Bevorzugt ist dabei eine Mittelung über mehr als eine Stunde oder mehr als einen Tag Fahrtzeit, da die Änderungen der Justage des Sensors - wie dargestellt - nur langsam erfolgen.

Darüber hinaus können die aus den Fahrtrichtungsvektoren der Objekte ermittelten Fahrtrichtungen und die mit Hilfe des Gierratensensors ermittelten Fahrtrichtungen über eine vorgegebene Anzahl von ermittelten Werten berechnet und abgespeichert werden. Dadurch wird sichergestellt, daß in jedem Fall eine genügend große Anzahl von ermittelten Werten der Mittelung zugeführt worden sind, bevor eine Korrektur der Justage des Sensors durchgeführt wird.

Für ein Nachjustieren des Sensors ist es vorteilhaft, daß aus der berechneten Winkeldejustage Korrekturwerte in horizontaler und vertikaler Richtung relativ zum Fahrzeug berechnet werden. Diese Korrekturwerte werden vorzugsweise in einem im Sensor angeordneten Speicher abgespeichert, so daß die Korrekturwerte zu einem beliebigen Zeitpunkt nach der Speicherung zum Nachjustieren des Sensors herangezogen werden können.

Für die Justage des Sensors werden bei einem bevorzugten Ausführungsbeispiel der vorliegenden Erfindung mindestens ein, vorzugsweise zwei Verstellmittel verwendet, um die Justage automatisch auf der Basis der ermittelten Korrekturwerte durchzuführen. Dabei ist vorzugsweise für jede Justagerichtung ein separates Verstellmittel vorgesehen. Dadurch wird eine fortlaufende Korrektur bzw. Nachjustage des Sensors relativ zum Fahrzeug möglich, da zum einen während der Fahrtdauer des Fahrzeuges die Winkeldejustage zwischen Sensor und Fahrzeug ermittelt wird und zum anderen ein automatisches Nachjustieren auf der Basis der ermittelten Korrekturwerte möglich ist. Somit ist ein selbständiges Nachjustieren ohne die Notwendigkeit des Aufenthaltes in einer Reparatur- oder Servicewerkstatt möglich, wodurch die Genauigkeit und Zuverlässigkeit des verwendeten Abstands- und Richtungssensors des Fahrzeuges erreicht wird.

In bevorzugter Weise werden aus den Korrekturwerten die Verstellwinkel von mindestens zwei Justageschrauben berechnet, die in der Halterung des Sensors zur Positionierung vorgesehen sind und vorzugsweise mit den zuvor genannten Verstellmitteln angetrieben werden. Dadurch wird die fortlaufende Justierung des Sensors erheblich erleichtert.

In einer weiteren Ausgestaltung der vorliegenden Erfindung erfolgt keine fortlaufende automatische Justierung des Sensors, sondern die Justage wird mittels der Justageschrauben manuell auf der Basis der abgespeicherten Korrekturwerte durchgeführt. Somit wird ein Nachjustieren in regelmäßigen Zeitabständen in einer Reparatur- und Servicewerkstatt durchgeführt, wodurch der technische Aufwand verringert wird, der ansonsten für ein automatisches Nachjustieren erforderlich ist.

Zuvor wurde das fortlaufende Nachjustieren des Sensors beschrieben. Sofern der Sensor neu am Fahrzeug angebracht wird oder vollständig neu justiert werden muß, wird der Sensor grob vorjustiert, so daß eine möglichst geringe Winkeldejustage des Sensors vorliegt. Dieses wird mit den herkömmlichen mechanischen Mitteln, die bspw. zur Ausrichtung eines Scheinwerfers bekannt sind, durchgeführt. Während einer anschließenden Testfahrt werden dann Korrekturwerte für eine feine Justage ermittelt und entweder automatisch oder manuell durchgeführt.

Insgesamt ermöglicht die vorliegende Erfindung ein sehr präzises Verfahren, das im wesentlichen ohne zusätzlichen hohen technischen Aufwand realisiert werden kann, wodurch die Genauigkeit und Zuverlässigkeit des Abstands- und Richtungssensors eines Fahrzeuges wesentlich verbessert werden. Dieses liegt insbesondere darin begründet, daß die vom Sensor selbst erzeugten Meßwerte für eine Überprüfung der Justage des Sensors herangezogen werden.

Gemäß einer weiteren Lehre der vorliegenden Erfindung wird das oben aufgezeigte technische Problem auch durch einen Sensor zur Bestimmung des Abstandes und der Richtung von Objekten relativ zu einem Fahrzeug dadurch gelöst, daß die zum Justieren der Ausrichtung des Sensors relativ zu einer am Fahrzeug befestigten Halterung vorgesehenen Justiermittel mit Hilfe von Antriebsmitteln selbsttätig einstellbar sind. Somit ist eine automatische Nachjustage des Sensors in seiner Ausrichtung relativ zum Fahrzeug möglich, wodurch die Sicherheit des gesamten Systems sowie dessen Zuverlässigkeit verbessert werden.

Die Erfindung wird im folgenden Anhand von Ausführungsbeispielen näher erläutert, wobei auf die Zeichnung bezug genommen wird. In der Zeichnung zeigen
- Fig. 1: ein Blockdiagramm zur Erläuterung des erfindungsgemäßen Verfahrens,
- Fig. 2: ein Ausführungsbeispiel eines erfindungsgemäßen Sensors in einer Seitenansicht und
- Fig. 3: den in Fig. 2 dargestellten Sensor in einer Ansicht entlang der Linie III-III in Fig. 2.

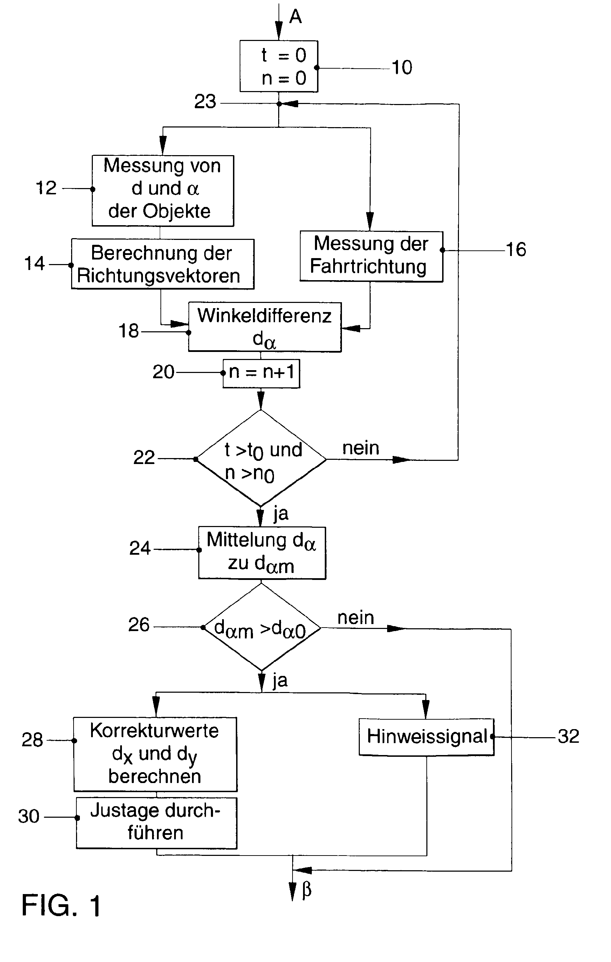

Fig. 1 zeigt ein Blockdiagramm zur Erläuterung des erfindungsgemäßen Verfahrens zum Justieren eines Sensors eines Fahrzeuges zur Bestimmung des Abstandes und der Richtung von Objekten relativ zum Fahrzeug. Der Ablauf eines Verfahrenszyklus beginnt in Fig. 1 oben an der mit A gekennzeichneten Position.

Zu Beginn werden die Variablen für die Zeit t und für die Anzahl der ermittelten Werte n in Schritt 10 gleich Null gesetzt.

Anschließend werden in den Schritten 12 und 14 mit Hilfe des Sensors der Abstand d und der Richtungswinkel α von Objekten relativ zum Fahrzeug erfaßt. Die Objekte werden zeitlich verfolgt und Richtungsvektoren werden berechnet. Anschließend wird aus den Richtungsvektoren die relative Lage der Fahrbahn zum Fahrzeug und daraus die gemessene Fahrtrichtung ermittelt.

Gleichzeitig wird im Schritt 16 mit Hilfe eines Gierratensensors und der Fahrzeuggeschwindigkeit die Fahrtrichtung des Fahrzeuges berechnet.

Die Ausgangswerte aus den Verfahrensschritten 14 und 16 werden im Schritt 18 zur Berechnung der Differenz der aus den Meßwerten des Sensors ermittelten Fahrtrichtungen und der mittels des Gierratensensors und der Fahrzeuggeschwindigkeit ermittelten Fahrtrichtungen berechnet.

Im Schritt 20 wird die Variable n um eins erhöht und im nachfolgenden Schritt 22 wird die Entscheidung getroffen, ob die bisher abgelaufenen Zeit t größer als ein vorgegebener Zeitraum tₒ und ob die Variable n größer als ein vorgegebener Wert n₀ sind. Ist dieses nicht der Fall, so wird das Verfahren am Punkt 23 fortgeführt. Sind dagegen beide Bedingungen des Entscheidungsschrittes 22 erfüllt, so wird das Verfahren mit dem Schritt 24 fortgeführt.

Im Schritt 24 werden alle zuvor berechneten Winkeldifferenzen gemittelt und ein Mittelwert dαₘ berechnet.

Im Entscheidungsschritt 26 wird festgestellt, ob der Mittelwert der Winkeldifferenzen dαₘ größer als ein vorgegebener Wert dα₀ ist. Ist diese Bedingung nicht erfüllt, so wird das Verfahren beendet, wie mit B gekennzeichnet ist. Ist die Bedingung im Schritt 26 erfüllt, wird das Verfahren wie folgt weitergeführt.

Zum einen werden im Schritt 28 aus dem Mittelwert der Differenzen dαₘ der Fahrtrichtungen die Winkeldejustage des Sensors berechnet, vorliegend als Korrekturwerte dx und dy für eine Nachjustage des Sensors. Diese Nachjustage wird im Schritt 30 durchgeführt, so daß eine genauere Justierung des Sensors relativ zum Fahrzeug gewährleistet wird.

Parallel zu den Schritten 28 und 30 besteht die Möglichkeit, im Schritt 32 ein Hinweissignal zu geben, um einem Benutzer des Fahrzeuges darüber zu informieren, daß eine Justage des Sensors notwendig und gegebenenfalls automatisch durchgeführt wird.

An der mit B gekennzeichneten Stelle in Fig. 1 wird der zuvor beschriebenen Verfahrensablauf beendet und kann am Punkt A erneut gestartet werden.

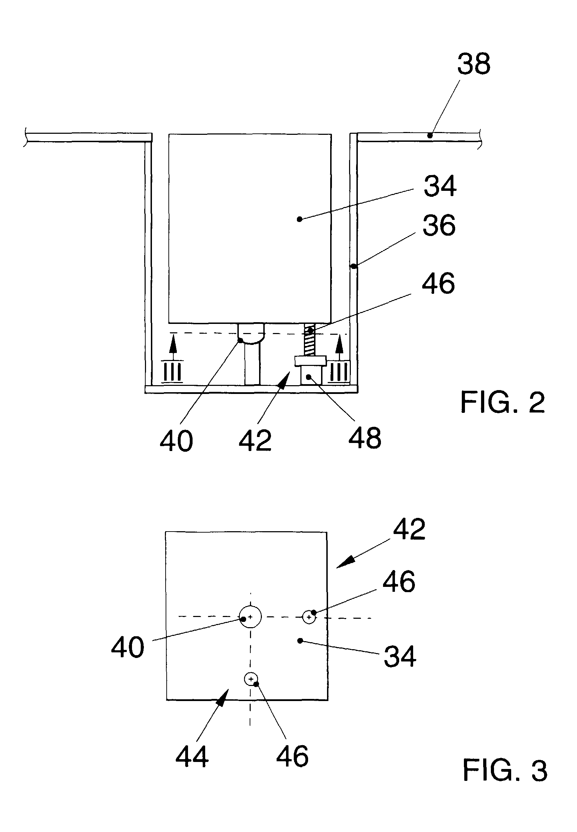

In den Fig. 2 und 3 ist ein Ausführungsbeispiel eines erfindungsgemäßen Sensors zur Bestimmung des Abstandes und der Richtung von Objekten relativ zu einem Fahrzeug dargestellt. Der Sensor weist ein Gehäuse 34 auf, in dem ein nicht näher dargestelltes Sende- und Empfangsmodul angeordnet ist. Weiterhin ist eine Halterung 36 an einem Element 38 des Fahrzeuges befestigt. Das Gehäuse 24 ist gegenüber der Halterung 36 über ein Drehgelenk 40 drehbar gelagert befestigt. Weiterhin sind zwei Linearantriebe 42 und 44 mit dem Gehäuse 34 einerseits und der Halterung 36 verbunden. Die Linearantriebe 42 und 44 bestehen jeweils aus einer Gewindespindel 46 sowie einem Motor 48 zum Verstellen der Gewindespindel 46. Da, wie Fig. 3 zeigt, die beiden Gewindespindeln 46 an zwei Positionen an dem Gehäuse 34 angreifen, deren Verbindungslinien zum Drehmittelpunkt des Kugelgelenkes 40 aufeinander senkrecht stehen, bewirken die Linearantriebe 42 und 44 ein unabhängiges Verdrehen des Gehäuses 34 um das Kugelgelenk 40 herum. Somit kann der Sensor in zwei voneinander unabhängigen Richtungen, bspw. einer horizontalen und einer vertikalen Richtung automatisch justiert werden, indem die Antriebe 42 und 44 separat voneinander angetrieben werden.

Dazu ist - wie in der Zeichnung nicht dargestellt - der Sensor mit einem Steuerungssystem zur Durchführung des oben beschriebenen Verfahrens zum Justieren des Sensors eines Fahrzeuges verbunden, wobei die als Motoren 48 ausgebildeten Antriebsmittel die als Gewindespindeln 46 ausgebildeten Justiermittel in Abhängigkeit von den Ausgangssignalen des Steuerungssystems automatisch einstellen. Dadurch ist ein Nachjustieren des Sensors während einer laufenden Benutzung ohne einen notwendigen Aufenthalt in einer Werkstatt möglich.

## Patentansprüche

1. Verfahren zum Justieren eines Sensors eines Fahrzeuges zur Bestimmung des Abstandes und der Richtung von Objekten relativ zum Fahrzeug,
- bei dem während der Fahrt fortlaufend mit Hilfe des Sensors der Abstand und der Richtungswinkel von Objekten relativ zum Fahrzeug erfaßt werden,
- bei dem die Objekte zeitlich verfolgt und Richtungsvektoren berechnet werden,
- bei dem aus den Richtungsvektoren die relative Lage der Fahrbahn zum Fahrzeug und daraus die gemessene Fahrtrichtung ermittelt wird,
- bei dem mit Hilfe eines Gierratensensors und der Fahrzeuggeschwindigkeit fortlaufend die Fahrtrichtung des Fahrzeuges berechnet wird,
- bei dem die Differenz der aus den Meßwerten des Sensors ermittelten Fahrtrichtungen und der mittels des Gierratensensors und der Fahrzeuggeschwindigkeit ermittelten Fahrtrichtungen berechnet werden und
- bei dem aus den Differenzen der Fahrtrichtungen die Winkeldejustage des Sensors berechnet wird.

2. Verfahren nach Anspruch 1, bei dem sich die erfaßten Objekte relativ zur Fahrbahn bewegen.

3. Verfahren nach Anspruch 2, bei dem aus den gemessenen Werten von bewegten Objekten die Position der Fahrbahn relativ zum Fahrzeug berechnet wird.

4. Verfahren nach einem der Ansprüche 1 bis 3, bei dem die erfaßten Objekte zumindest teilweise ruhende Objekte sind.

5. Verfahren nach einem der Ansprüche 1 bis 4, bei dem die aus den Richtungsvektoren der Objekte ermittelten Fahrtrichtungen und die mit Hilfe des Gierratensensors und der Fahrzeuggeschwindigkeit ermittelten Fahrtrichtungen über einen vorgegebenen Zeitraum berechnet und abgespeichert werden.

6. Verfahren nach Anspruch 5, bei dem die Winkeldejustage des Sensors über eine Mehrzahl von ermittelten Fahrtrichtungen gemittelt wird.

7. Verfahren nach Anspruch 6, bei dem die Mittelung jeweils über eine vorgegebene zurückliegende Zeitdauer erfolgt.

8. Verfahren nach Anspruch 7, bei dem die vorgegebene Mittelungszeitdauer mehr als 1 Minute, mehr als 10 Minuten, mehr als eine Stunde oder mehr als ein Tag Fahrtzeit beträgt.

9. Verfahren nach Anspruch 6, bei dem die Mittelung jeweils über eine vorgegebene Anzahl von ermittelten Fahrtrichtungen erfolgt.

10. Verfahren nach einem der Ansprüche 1 bis 9, bei dem aus der Winkeldejustage Korrekturwerte in horizontaler und vertikaler Richtung relativ zum Fahrzeug berechnet werden.

11. Verfahren nach Anspruch 10, bei dem die Korrekturwerte in einem, vorzugsweise im Sensor angeordneten, Speicher abgespeichert werden.

12. Verfahren nach einem der Ansprüche 10 oder 11, bei dem die Justage des Sensors mit Hilfe von mindestens einem Verstellmittel automatisch auf der Basis der ermittelten Korrekturwerte erfolgt.

13. Verfahren nach Anspruch 12, bei dem für jede Justagerichtung ein separates Verstellmittel vorgesehen ist.

14. Verfahren nach einem der Ansprüche 10 bis 13, bei dem aus den Korrekturwerten die Verstellwinkel von mindestens zwei Justageschrauben berechnet werden, die in der Halterung des Sensors zur Positionierung vorgesehen sind und vorzugsweise mit den Verstellmitteln angetrieben werden.

15. Verfahren nach Anspruch 14, bei dem die Justage mittels der Justageschrauben manuell auf der Basis der abgespeicherten Korrekturwerte erfolgt.

16. Verfahren nach einem der Ansprüche 1 bis 15, bei dem der Sensor bei einer Neujustage grob vorjustiert wird und während einer Testfahrt Korrekturwerte für eine feine Justage ermittelt werden.

17. Sensor zur Bestimmung des Abstandes und der Richtung von Objekten relativ zu einem Fahrzeug,
- mit einem Gehäuse (34),
- mit einem im Gehäuse (34) angeordneten Sende- und Empfangsmodul,
- mit einer am Fahrzeug befestigbaren Halterung (36),
- mit Justiermitteln (46) zum Justieren der Ausrichtung des Sensors relativ zur Halterung (36),
**dadurch gekennzeichnet,**
- daß Antriebsmittel (48) für ein selbsttätiges Einstellen der Justiermittel (46) vorgesehen sind.

18. Sensor nach Anspruch 17, **dadurch gekennzeichnet,** daß die Antriebsmittel (48) mit einem Steuerungssystem zur Durchführung eines Verfahrens zum Justieren eines Sensors eines Fahrzeuges zur Bestimmung des Abstandes und der Richtung von Objekten relativ zum Fahrzeug nach einem der Ansprüche 1 bis 16 verbunden ist und die Antriebsmittel (48) die Justiermittel (46) in Abhängigkeit von Ausgangssignalen des Steuerungssystems einstellen.
